Europäisches Patentamt

European Patent Office

Office européen des brevets

(19)

(11) **EP 0 867 079 B1**

## (12) FASCICULE DE BREVET EUROPEEN

(45) Date de publication et mention
de la délivrance du brevet:
**26.01.2000 Bulletin 2000/04**

(21) Numéro de dépôt: **96941690.8**

(22) Date de dépôt: **04.12.1996**

(51) Int Cl.⁷: $H04B\ 7/005$, $H04L\ 25/03$

(86) Numéro de dépôt international:
**PCT/FR96/01927**

(87) Numéro de publication internationale:
**WO 97/23061 (26.06.1997 Gazette 1997/27)**

(54) **PROCEDE ET DISPOSITIF D'EGALISATION MULTICAPTEUR PERMETTANT UNE RECEPTION MULTICAPTEUR EN PRESENCE D'INTERFERENCES ET DE MULTITRAJETS DE PROPAGATION**

VERFAHREN UND ANORDNUNG ZUR ENTZERRUNG VON MEHRFACHANTENNENSIGNALEN FÜR MEHRFACHELEMENTEMPFANG IN GEGENWART VON STÖRUNGEN UND MEHRWEGAUSBREITUNGEN

MULTISENSOR EQUALISATION METHOD AND DEVICE ENABLING MULTISENSOR RECEPTION IN THE PRESENCE OF INTERFERENCE AND MULTIPATH PROPAGATION

(84) Etats contractants désignés:
**BE CH DE FI FR GB IT LI SE**

(30) Priorité: **15.12.1995 FR 9514914**

(43) Date de publication de la demande:
**30.09.1998 Bulletin 1998/40**

(73) Titulaire: **THOMSON CSF**
**75008 Paris (FR)**

(72) Inventeurs:
• **PIPON, François** Thomson-CSF S.C.P.I.
**F-94117 Arcueil Cédex (FR)**
• **PIREZ, Didier** Thomson-CSF S.C.P.I.
**F-94117 Arcueil Cédex (FR)**
• **VILA, Pierre** Thomson-CSF S.C.P.I.
**F-94117 Arcueil Cédex (FR)**

(74) Mandataire: **Lincot, Georges et al**
**THOMSON-CSF,**
**Propriété Intellectuelle,**
**Département Protection et Conseil,**
**TPI/PC,**
**13, av. du Prés. Salvador Allende**
**94117 Arcueil Cédex (FR)**

(56) Documents cités:
**EP-A- 0 669 729        US-A- 5 465 276**

• **1995 INTERNATIONAL CONFERENCE ON ACOUSTICS, SPEECH, AND SIGNAL PROCESSING. CONFERENCE PROCEEDINGS (CAT. NO.95CH35732), 1995 INTERNATIONAL CONFERENCE ON ACOUSTICS, SPEECH, AND SIGNAL PROCESSING, DETROIT, MI, USA, 9-12 MAY 1995, ISBN 0-7803-2431-5, 1995, NEW YORK, NY, USA, IEEE, USA, pages 1872-1875 vol.3, XP002011256 VILA P ET AL: "MMSE antenna diversity equalization of a jammed frequency-selective fading channel"**

## Description

L'invention concerne un procédé d'égalisation multicapteur permettant la démodulation d'un message numérique de type modulation numérique série, en présence de multitrajets de propagation et de sources interférentes appelées également brouilleurs, pour des modulations formées de trames comportant des séquences d'apprentissage et des séquences de symboles d'information. Elle s'appuie sur les techniques de traitement d'antenne, et nécessite donc l'utilisation d'un réseau comportant plusieurs capteurs.

Pour de nombreuses applications en radiocommunications numériques, la transmission entre l'émetteur et le récepteur se fait suivant plusieurs trajets de propagation. Le temps de retard entre les différents trajets pouvant être supérieur à la durée-symbole, une égalisation devient nécessaire pour compenser l'interférence inter-symboles (IIS) ainsi générée.

Ce phénomène se produit en particulier dans la gamme HF, où les multitrajets de propagation, issus des réflexions sur les différentes couches ionosphériques, peuvent être espacés de 5 ms, soit plusieurs fois la durée symbole (pour des modulations dont la largeur de bande est typiquement de l'ordre de 3 kHz). Il se produit également dans d'autres gammes de fréquence pour des communications à très haut débit, de type GSM (270 kbits/s, soit une durée-symbole de 3,7 µs), en milieu urbain ou montagneux, où les différents trajets provenant des réflexions sur différents obstacles (immeubles, montagne,...) peuvent être séparés de 10 voir 20 µs.

L'invention peut donc s'appliquer notamment à la gamme des hautes fréquences (HF), particulièrement intéressante en radiocommunications car permettant des communications à longue distance grâce aux phénomènes de réflexion sur les différentes couches de la ionosphère, ou encore pour des applications de type GSM. L'invention peut aussi conduire à une augmentation de la capacité des systèmes de radiocommunication cellulaires en permettant la mise en oeuvre des techniques d'Accès Multiple à Répartition Spatiale (AMRS), qui consistent à permettre à plusieurs utilisateurs suffisamment espacés spatialement d'utiliser la même fréquence au même moment.

Dans de nombreux systèmes actuellement en service, l'adaptation aux conditions de propagation est rendue possible par l'insertion dans la forme d'onde de séquences d'apprentissage connues du récepteur. Différentes solutions sont alors possibles pour réaliser l'égalisation adaptative du signal utile reçu, les deux plus courantes étant :

- l'égalisation par un algorithme de Viterbi, nécessitant au préalable une estimation du canal de propagation en utilisant la séquence d'apprentissage. Cette égalisation présente l'avantage de minimiser la probabilité d'erreur sur la séquence entière de symboles d'information, mais elle devient très coûteuse lorsque la durée de la réponse impulsionnelle du canal est très supérieure à la durée-symbole Ts. En effet, le nombre d'états que doit traiter l'algorithme de Viterbi est égal à $M^L$, où M est la taille de l'alphabet de la modulation et L la longueur de la réponse impulsionnelle du canal en nombre de périodes-symbole. Cette solution est utilisée pour les applications de type GSM, où l'algorithme de Viterbi comporte typiquement 32 états (L=5 et M=2).

Dans la gamme HF, le nombre d'états devient trop important pour que l'algorithme de Viterbi soit utilisable (typiquement, M vaut 4 ou 8, et L vaut 12, ce qui correspond à une réponse impulsionnelle s'étalant sur 5 ms) et la seconde solution utilisant un égaliseur DFE, abréviation anglo-saxonne pour "Decision Feedback Equalizer", est souvent utilisée.

Cette seconde solution consiste à utiliser les séquences d'apprentissage pour optimiser un critère d'EQM (Erreur Quadratique Moyenne). L'égaliseur tente de fournir à l'organe de décision, adapté à la modulation, un signal débarrassé de l'IIS, ou dans lequel l'IIS a été fortement réduite. L'égaliseur DFE utilise à cet effet des filtres transverses et récursifs auto-adaptatifs, qui sont adaptés par un algorithme du type moindres carrés récursifs (de préférence à un algorithme du gradient pour des raisons de vitesse de convergence) ou calculés directement à partir d'une estimée du canal de transmission voir à ce sujet l'article de P.K. SHUKLA et L.F. TURNER, "Channel-estimation-based adaptative DFE for fading multipath radio channels", Proc. of 1989 International Conference on Communications, ICC'89 [1] . Sur les séquences d'apprentissage, les symboles connus sont utilisés pour adapter les différents coefficients. La poursuite des variations du canal en dehors des séquences connues est assurée en utilisant les symboles décidés au fur et à mesure comme réplique.

Dans la gamme HF, les différents trajets de propagation sont le plus souvent affectés de "fading" plat. Lorsque ce "fading" est important, l'égaliseur DFE voit ses performances se dégrader:

D'autre part, en présence de brouillage, ces techniques deviennent rapidement inefficaces, et des techniques spécifiques de lutte anti-brouillage sont nécessaires, telles que le codage correcteur d'erreur, l'excision de brouillage par filtrage à encoches ou l'utilisation de liaisons à évasion de fréquence. Ces techniques, utilisées dans de nombreux systèmes opérationnels, sont malgré tout limitées lorsque les interférences sont fortes et occupent toute la bande du signal utile. Dans ces conditions, il convient d'utiliser des moyens de lutte anti-brouillage plus performants basés sur l'utilisation des techniques de filtrage d'antenne.

Les techniques de filtrage d'antenne, apparues au début des années 60 notamment décrites dans un article de P.W. HOWELLS, "Explorations in fixed and adaptative resolution at GE and SURC", IEEE Trans-Ant-Prop, vol AP-24, N°5, pp 575-584, Sept. 1976 [2] dont une synthèse exhaustive est présentée dans une thèse de P. CHEVALIER, "Antenne adaptative : d'une structure linéaire à une structure non linéaire de Voltera", Juin 1991 [3], visent à combiner les signaux reçus par les différents capteurs constituant l'antenne, de façon à optimiser la réponse de celle-ci au scénario de signal utile et de brouilleurs.

Le choix des capteurs et de leur disposition est un paramètre important et influe en grande partie sur les performances. Trois types de possibilités peuvent être envisagés :

- les capteurs sont identiques et disposés en différents points de l'espace, la discrimination entre le signal utile et les brouilleurs se fait par la direction d'arrivée.
- les capteurs sont disposés en un même point de l'espace (antenne colocalisée) et possèdent des diagrammes de rayonnement différents. La discrimination peut alors se faire suivant la polarisation et la direction d'arrivée.
- les deux possibilités précédentes peuvent être combinées : plusieurs antennes colocalisées peuvent être disposées en différents points de l'espace.

D'autre part, les conditions de propagation et de brouillage pouvant évoluer au cours du temps, il est nécessaire de pouvoir adapter l'antenne en temps réel à ces variations par l'utilisation d'une technique de filtrage d'antenne particulière : l'antenne adaptative. Une antenne adaptative est une antenne qui détecte les sources d'interférences automatiquement, en construisant dans leur direction des trous de son diagramme de rayonnement, tout en améliorant la réception de la source utile, sans connaissance a priori sur les interférences et à partir d'une information minimale sur le signal utile. De plus, grâce à la capacité de poursuite des algorithmes utilisés, une antenne adaptative est capable de répondre automatiquement à un environnement changeant.

Les antennes adaptatives sont caractérisées par la façon dont elles discriminent le signal utile et les brouilleurs, c'est-à-dire par la nature de l'information sur le signal utile qu'elles exploitent. Cette discrimination peut se faire de cinq façons différentes selon [3] :

- par la direction d'arrivée,
- par la modulation,
- par le temps, par exemple pour les liaisons à évasion de fréquence,
- par la puissance,
- de manière aveugle (par exemple, les méthodes de séparation de sources aux ordres supérieurs).

Jusqu'à une période très récente, il a toujours été envisagé dans les systèmes de transmission un fonctionnement indépendant des techniques d'égalisation adaptative monocapteur et d'antenne adaptative, ce qui conduit à des performances sous-optimales.

Ainsi, le système Dobson décrit dans le brevet N°PCT/AU85/00157 de R. DOBSON intitulé "Adaptative antenna array", Feb. 1986 [4], qui utilise la discrimination par le temps, parvient à réjecter efficacement les brouilleurs mais ne cherche pas à optimiser le rapport signal utile/bruit de fond. De plus, il ne peut être utilisé que lorsque la forme d'onde permet une réception en absence de signal utile.

Dans un contexte de transmission, et lorsque des séquences d'apprentissage sont introduites dans la forme d'onde, il est préférable d'utiliser les techniques de traitement d'antenne à discrimination par la modulation, car celles-ci permettent d'optimiser le rapport signal utile/bruit, tout en évitant la mise en oeuvre d'une étape de goniométrie. Mais, celles qui sont employées aujourd'hui utilisent des poids complexes sur chacun des capteurs de l'antenne adaptative qui sont adaptés par un critère de minimisation d'une EQM entre le signal de sortie de l'antenne et un signal réplique. Une telle antenne, denommée FASR (Filtre Adapté Spatial adapté à l'aide d'une Réplique), permet la réjection des brouilleurs, mais en présence de multitrajets de propagation, elle :

- "pointe" dans la direction de l'un des trajets (celui qui est corrélé avec la réplique), c'est-à-dire remet en phase les contributions de ce trajet sur les différents capteurs (pour des capteurs omnidirectionnels, on obtient donc un gain en rapport signal à bruit de 10 log N, où N est le nombre de capteurs utilisés),
- et cherche à réjecter les trajets décorrélés de celui-ci (perdant ainsi l'énergie associée à ces trajets), ceux-ci étant vus par l'antenne comme des brouilleurs à part entière. Une telle antenne peut donc être fortement pénalisée en présence de plusieurs trajets de propagation utiles. En effet, la réjection des trajets utiles décorrélés peut se faire au détriment de la réjection des brouilleurs, les performances du récepteur multicapteur peuvent même devenir moins bonnes que celles du récepteur monocapteur lorsque deux trajets de propagation décorrélés temporellement sont très corrélés spatialement.

Afin d'améliorer les performances de cette dernière technique de traitement d'antenne, l'idée est de la coupler à une technique d'égalisation monocapteur. On obtient ainsi les égaliseurs multicapteurs comportant une partie spatiale, composée de différents filtres disposés sur chacune des voies de réception, et une partie temporelle disposée en sortie de la partie spatiale.

Plusieurs égaliseurs multicapteurs de ce type ont déjà été proposés et étudiés, essentiellement dans le domaine des transmissions radiomobile. Voir à ce sujet les articles de K.E. SCOTT et S.T. NICHOLS, "Antenna Diversity with Multichannel Adaptative Equalization in Digital Radio" [5] et de P. BALABAN et J. SALZ, "Optimum Diversity Combining and Equalization in Digital Data Transmission with Applications to Cellular Mobile Radio - Part I : Theorical Considerations", IEEE Trans. on Com., Vol. 40, N° 5, pp 885-894, May 1992 [6]. Ils ont jusqu'ici été envisagés pour combattre le "fading" sélectif engendré par les multitrajets, en environnement non brouillé. Ces égaliseurs sont constitués de filtres à Réponse Impulsionnelle Finie, un sur chacune des voies, suivi d'un additionneur, puis d'un égaliseur monodimensionnel au rythme symbole. Le critère utilisé pour optimiser ces égaliseurs multicapteurs est celui de la minimisation de l'EQM entre leur sortie et une réplique.

Dans l'égaliseur proposé par Scott et al [5], l'adaptation des coefficients s'effectue par un algorithme des moindres carrés, et son utilisation pour un canal HF n'est pas envisageable pour les formes d'onde utilisées. En effet, si l'on tient compte de l'étalement temporel des multitrajets, le nombre de coefficients à adapter est trop important pour que l'algorithme puisse converger sur la séquence d'apprentissage.

Dans l'égaliseur proposé par Balaban et al [6], les coefficients sont calculés après une estimation du canal de propagation. L'article n'aborde pas le problème de l'environnement brouillé.

Un égaliseur multicapteur conduisant à une amélioration des performances des égaliseurs multicapteurs existants, en permettant notamment la lutte anti-brouillage, a fait l'objet d'une demande de brevet déposée en France par la Demanderesse le 25 février 1994, intitulée "Procédé permettant une égalisation multivoies dans un récepteur radioélectrique, en présence d'interférences et de multitrajets de propagation" [7], et publiée sous le n° 2 716 761. Cet égaliseur permet de rendre robuste les égaliseurs à diversité spatiale fondés sur une estimée du canal de transmission et fonctionnant en environnement non brouillé en y incorporant une fonction de réjection des brouilleurs (réalisée par un prétraitement des signaux capteurs). Cet égaliseur est particulièrement intéressant puisqu'il est optimal lorsque le bruit est blanc temporellement (bruit de fond et brouilleur(s) blancs temporellement et brouilleur(s) possédant un seul trajet de propagation), quel que soit le nombre de trajets associés au signal utile. Par contre, sa mise en oeuvre nécessite une puissance de calcul pouvant devenir importante lorsque la longueur de la réponse impulsionnelle du canal de propagation utile augmente, ce qui peut devenir pénalisant pour certaines applications.

L'invention a pour but de pallier cet inconvénient.

A cet effet, l'invention a pour objet un procédé d'égalisation multicapteur dans un récepteur radioélectrique, du type comportant un réseau de capteurs et une partie de filtrage spatial couplée à une partie de filtrage temporel comportant chacune un nombre déterminé de coefficients, permettant la démodulation d'un message numérique de type modulation numérique série reçu par le récepteur, en présence de multitrajets de propagation et de sources interférentes, pour des modulations formées de trames comportant des séquences d'apprentissage et des séquences d'information, caractérisé en ce qu'il comporte :

- une première étape consistant à numériser le signal reçu par chaque capteur, à transformer le signal numérisé en bande de base, et à filtrer par un filtrage passe-bas le signal en bande de base,
- une deuxième étape consistant à effectuer une prise de synchronisation sur les signaux issus de la première étape, à estimer les trajets utiles et le décalage en fréquence résultant des imprécisions sur les fréquences d'émission et de réception et de la propagation ionosphérique,
- une troisième étape consistant à compenser le décalage en fréquence des signaux délivrés par chaque capteur, en fonction de l'estimation effectuée dans la deuxième étape,
- une quatrième étape consistant à calculer d'une part les coefficients d'un filtre spatial appliqué sur les signaux issus de la troisième étape et d'autre part les coefficients d'un filtre temporel appliqué sur le signal réplique, constitué soit à partir des symboles connus pour les séquences d'apprentissage, soit à partir des symboles démodulés pour les séquences d'information les coefficients de ces deux filtres étant calculés pour minimiser, sous une contrainte déterminée, un critère d'erreur quadratique moyenne entre le signal de sortie du filtre spatial et le signal de sortie du filtre temporel, et consistant à filtrer les signaux issus de la troisième étape à l'aide des coefficients du filtre spatial ainsi calculés, optimisant ainsi le gain du réseau de capteurs dans la direction du signal utile en sortie du filtrage spatial et assurant la réjection des interférences, et
- une cinquième étape consistant à égaliser le signal issu de la quatrième étape par une égalisation monodimensionnelle à un rythme symbole décidant des symboles transmis ;

les coefficients des filtres spatial et d'égalisation ainsi que l'estimée du canal utile étant mis à jour suivant un séquencement déterminé des trames.

L'invention a également pour objet un récepteur multiplicateur pour la mise en oeuvre du procédé selon l'invention.

L'invention a principalement pour avantage d'être mise en oeuvre par un égaliseur multicapteur, conduisant à de légèrement moins bonnes performances que l'égaliseur selon [7], mais moins complexe numériquement.

Bien que le procédé selon l'invention soit mis en oeuvre à partir d'un égaliseur multicapteur possédant une puissance de calcul moindre que celle de l'égaliseur cité précédemment, il assure néanmoins une fonction de réjection de brouilleurs. Il améliore par ailleurs les performances du FASR : le filtrage spatial des signaux d'entrée est réalisé par une structure identique au FASR, structure bande étroite comportant un coefficient complexe par voie, mais le critère d'EQM optimisé est différent. Contrairement au FASR, l'algorithme n'optimise pas l'EQM entre la sortie de la partie spatiale et un signal réplique (corrélé à l'un des trajets associés au signal utile), mais l'EQM entre la sortie de la partie spatiale et la sortie d'un filtre temporel à l'entrée duquel se trouve le signal réplique. Le procédé selon l'invention permet à la partie spatiale de réjecter uniquement les interférences, et non les multitrajets associés au signal utile décorrélés avec la réplique. Il conduit donc à une amélioration générale des performances du FASR.

D'autres avantages et caractéristiques de la présente invention apparaîtront plus clairement à la lecture de la description qui suit et des figures annexées qui représentent :

- la figure 1, les principales étapes du procédé selon l'invention,
- la figure 2, un schéma fonctionnel d'un récepteur multicapteur pour la mise en oeuvre du procédé selon l'invention,
- la figure 3, un schéma fonctionnel des moyens de filtrage spatial et d'estimation de canal selon l'invention, et
- les figures 4 et 5, la mise à jour et l'enchaînement des traitements du récepteur mettant en oeuvre le procédé selon l'invention.

La sortie de la partie spatiale est traitée par un égaliseur monodimensionnel au rythme-symbole qui décide des symboles transmis. Ce dernier peut être notamment un égaliseur fondé sur un algorithme de Viterbi, ou un égaliseur DFE.

La présente invention remplit donc conjointement les fonctions suivantes :

- réjection des brouilleurs,
- optimisation du gain dans la direction du signal utile,
- réduction des distorsions engendrées par les multitrajets associés au signal utile.

Les deux premières fonctions sont assurées par la partie spatiale, la troisième par l'égaliseur placée en sortie de celle-ci.

Un exemple de réalisation est donné ci-après dans un contexte de transmissions HF utilisant une modulation QPSK, abréviation anglo-saxonne pour "Quadri-Phase-Shift Keying" :

- filtre d'émission 112 Nyquist dont la bande à 3 dB est de 2400 Hz,
- débit égal à 2400 bauds,
- symboles transmis constitués en trames de 256 symboles comportant une séquence d'apprentissage de 80 symboles placée en début de trame (pour effectuer la synchronisation et le calcul des coefficients de l'égaliseur), suivie en alternance de séquences de 32 symboles d'information et de séquences de 16 symboles connus (pour permettre à l'égaliseur de poursuivre les variations du canal).

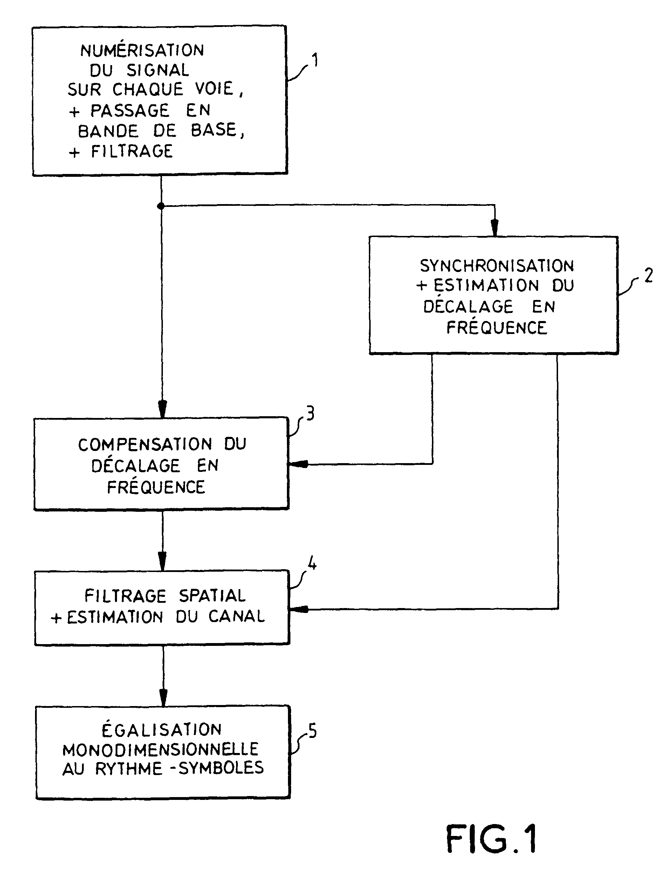

Le procédé selon l'invention illustré à la figure 1 comporte cinq étapes principales 1 à 5:

- une première étape 1 de numérisation du signal sur chaque voie, son passage en bande de base et son filtrage de Nyquist,
- une deuxième étape 2 de synchronisation du signal et l'estimation du décalage en fréquence, résultant des imprécisions des synthétiseurs de fréquences émission et réception et de la propagation ionosphérique,
- une troisième étape 3 de compensation du décalage en fréquence sur les signaux capteurs,
- une quatrième étape 4 de filtrage spatial des signaux et d'estimation du canal utile en sortie du filtre spatial, qui assure la réjection des interférences et optimise le gain dans la direction du signal utile, et
- une cinquième étape 5 d'égalisation monodimensionnelle à un rythme-symbole, qui décide des symboles transmis (symboles décidés).

Les coefficients des filtres spatial et d'égalisation ainsi que l'estimée du canal utile sont mis à jour au début de chacune des séquences d'information SI de la trame courante.

Dans l'exemple de réalisation qui concerne la gamme HF, l'égalisation est effectuée par un égaliseur DFE, dont les coefficients peuvent être calculés soit directement à partir de l'estimée du canal utile en sortie du filtre spatial, soit par un algorithme adaptatif fonctionnant indépendamment du filtrage spatial.

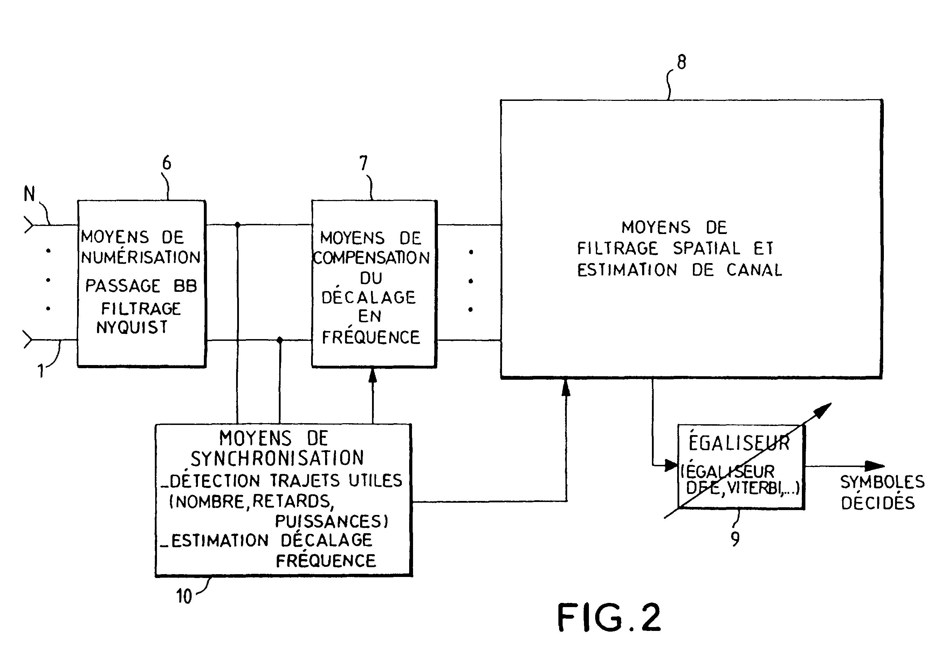

Le procédé selon l'invention est mis en oeuvre par un récepteur multicapteur dont un schéma fonctionnel est illustré à la figure 2.

Il comporte un réseau de capteurs 1 à N, couplé à l'entrée de moyens 6 de numérisation, de passage en bande de bande de base et de filtrage passe-bas des signaux reçus par le réseau de capteurs. Ils sont couplés en sortie à des moyens 7 de compensation du décalage en fréquence entre les fréquences d'émission et de réception, eux-mêmes couplés en sortie à des moyens 8 de filtrage spatial et d'estimation de canal. La sortie des moyens de filtrage 8 spatial est couplée à l'entrée d'un égaliseur 9, par exemple un égaliseur DFE, de Viterbi, ...

Des moyens 10 de synchronisation reçoivent les signaux délivrés par les moyens 6 de numérisation, de passage en bande de base et de filtrage passe-bas, et injectent ses propres informations aux moyens 7 de compensation du décalage en fréquence (informations concernant l'estimation du décalage en fréquence) et aux moyens 8 de filtrage spatial et d'estimation du canal (informations concernant la détection des trajets utiles : nombre, retards, puissances).

Un signal émis d(t) arrive sur le réseau de capteurs 1 à N, appelé également antenne, comportant N capteurs, après son passage dans le canal ionosphérique. Chacun des P trajets de propagation est reçu par l'antenne avec un gain complexe $\alpha_i(t)$ et un retard $\tau_i$ par rapport au signal émis. Soit $\vec{x}(t)$ le vecteur formé par les signaux reçus par les N capteurs composant l'antenne :

$$\vec{x}(t) = \sum_{i=1}^{P} \alpha_i(t)\, d\left(t - \tau_i\right) \vec{s}_i + \vec{b}(t) \qquad (1)$$

où :

- $\vec{s}_i$ est le vecteur directeur associé au trajet i,
- $\vec{b}(t)$ est un bruit additif, indépendant du signal utile, et prenant en compte les contributions du bruit de fond et des brouilleurs.

La non stationnarité du canal porte sur les amplitudes et les phases des différents trajets, d'où la dépendance en temps des quantités $\alpha_i(t)$. Par contre, les retards $\tau_i$ sont relativement stables sur des durées de l'ordre du quart d'heure et peuvent donc être considérés comme constants.

Dans l'étape 1 de numérisation des signaux et filtrage de Nyquist, les signaux sont numérisés à une fréquence multiple de la fréquence symbole, de manière à obtenir une précision suffisante sur l'instant de synchronisation. Pour l'exemple de réalisation décrit, les signaux sont numérisés à 9600 Hz, ce qui correspond à un suréchantillonage d'un facteur 4. Les signaux sont ensuite transposés en bande de base puis filtrés par un filtre passe-bas, de type Nyquist par exemple.

L'égalisation multicapteurs mise en oeuvre par l'invention est nécessairement précédée d'une étape 2 de synchronisation. Cette étape 2 met en oeuvre un procédé de synchronisation multicapteur décrit notamment dans un brevet déposé par la Demanderesse le 21 janvier 1994, intitulé "Synchronisation en présence de brouilleurs et de multitrajets" et publié sous le N° 2 715 488 [8], ou tout autre procédé permettant une synchronisation en présence de brouilleurs et de multitrajets. Il est utilisé afin :

- d'effectuer la prise de synchronisation,
- d'estimer le nombre de trajets, ainsi que les temps de retard relatifs des différents trajets et leur puissance relative,
- d'estimer le décalage en fréquence entre les synthétiseurs à l'émission et la réception. Ce décalage en fréquence est compensé avant d'effectuer l'égalisation multicapteurs.

On note Te, la période d'échantillonnage pour la synchronisation et Ts, la période-symbole de la modulation émise (Te = $\frac{Ts}{4}$ dans l'exemple de réalisation décrit).

Les temps de retard estimés peuvent s'exprimer en fonction de Te, $\tau_i = p_i$ Te, et le signal échantillonné reçu par l'antenne peut alors s'écrire :

$$\bar{x}(nTe) = \sum_{i=1}^{P} \alpha_i(nTe)\, d(nTe - pi\, Te)\, \bar{s}_i + \bar{b}(nTe) \qquad (2)$$

L'algorithme de calcul de la partie spatiale travaille au rythme-symbole, le signal d'entrée échantillonné au rythme symbole s'écrit :

$$\bar{x}(n) = \sum_{i=1}^{P} \alpha_i(n)\, d(nTs - pi\, Te)\, \bar{s}_i + \bar{b}(n) \qquad (3)$$

L'étape 3 permet de compenser le décalage en fréquence (3) $\Delta f$ estimé à l'issue de l'étape de synchronisation. Ce décalage est compensé sur les signaux d'entrée en appliquant la formule suivante :

$$\bar{x}'(n) = \bar{x}(n)\, \exp\!\left(-j\, \Delta f\, \frac{n}{Fs}\right) \qquad (4)$$

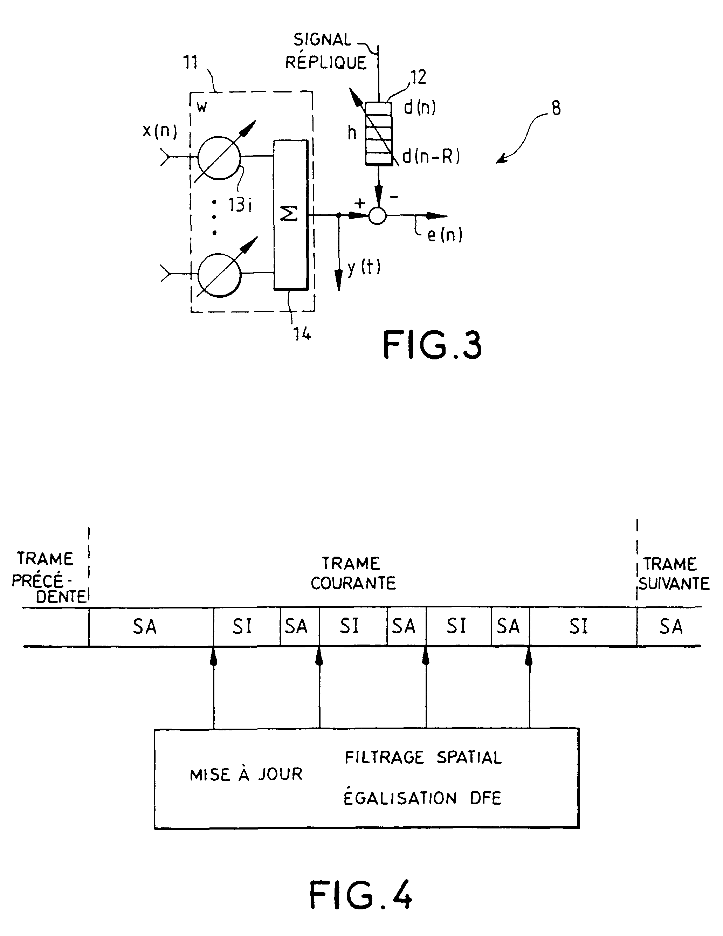

Une structure des moyens 8 de filtrage spatial et d'estimation de canal est illustrée par le schéma de la figure 3.

Elle comporte une partie de filtrage spatiale II délimitée par une ligne fermée discontinue et une partie de filtrage temporel 12. La partie de filtrage spatial 11 met en oeuvre un filtre $13_i$ à un seul coefficient complexe par voie, qui permet de pondérer le signal d'entrée par un premier vecteur de pondération $\vec{w}$. Les signaux issus de chaque coefficient complexe sont sommés par un sommateur 14. La partie de filtrage temporel 12 met en oeuvre un filtre temporel comportant R+1 coefficients qui permet de pondérer le signal de réplique par un deuxième vecteur de pondération $\vec{h}$. Le vecteur $\vec{h}$ permet d'obtenir une estimée du canal utile en sortie de la partie spatiale 11. Le signal de sortie da la partie spatiale, noté $y(t) = \vec{w}^+ \vec{x}(t)$, est fourni ensuite à l'égaliseur DFE 9 couplé en sortie de la partie spatiale 11.

En notant $\vec{d}(n) = [d(nTs), d(n-1)Ts, ..., d(n-R)Ts]^T$, le vecteur d'entrée de la partie temporelle 12, échantillonnée au rythme symbole, le critère optimisé pour calculer $\vec{h}$ et $\vec{w}$ est un critère d'EQM qui s'exprime par la formule suivante :

$$EQM = E\left[\left\|e(t)\right\|^2\right] = E\left[\left\|\vec{w}^+\vec{x}(t) - \vec{h}^+\vec{d}(t)\right\|^2\right] \qquad (5)$$

où $\|e(t)\|$ correspond à la norme de e(t) et

$$E\left[\left\|\vec{w}^+\vec{x}(t) - \vec{h}^+\vec{d}(t)\right\|^2\right]$$

à l'espérance mathématique,
et en notant:

$$R_{XX} = E\left[\bar{x}(t)\, \bar{x}(t)^+\right],$$

$$R_{DX} = E\left[\bar{d}(t)\, \bar{x}(t)^+\right],$$

$$R_{DD} = E\left[\vec{d}(t)\,\vec{d}(t)^{+}\right]$$

"+", en exposant, désigne l'opérateur de transposition-conjugaison.
le critère minimisé s'exprime par la formule suivante :

$$EQM = \vec{w}^{+}\,R_{XX}\,\vec{w} - \vec{h}^{+}\,R_{DX}\,\vec{w} - \vec{w}^{+}\,R_{DX}^{+}\,\vec{h} - \vec{h}^{+}\,R_{DD}\,\vec{h} \tag{6}$$

La minimisation de ce critère conduisant à la solution nulle, il est nécessaire de rajouter une contrainte. Deux types de contraintes peuvent être envisagées :

- une première contrainte ou $\vec{h}^{+}\,\vec{h}=1$, c'est-à-dire une contrainte de norme sur le vecteur $\vec{h}$, et
- une deuxième contrainte ou $\vec{h}^{+}\,\vec{f}=1$, où $\vec{f}$ est un vecteur à (R+1) composantes comportant R zéros et un un correspondant au trajet d'indice $i_0$ de plus forte puissance (déterminé à partir de la synchronisation 2) : $\vec{f}=[0, ..., 0, 1, 0, ..., 0]^T$ où "T", en exposant, désigne l'opérateur de transposition. Cette contrainte permet à la partie spatiale 11 de "pointer" en direction du trajet principal.

Avantageusement, la synchronisation 2 est effectuée de telle sorte que le retard du trajet d'indice $i_0$ soit un multiple de la période-symbole.

Le calcul de la solution du problème d'optimisation est décrit ci-après pour chacune des contraintes précédentes.

En prenant la contrainte $\vec{h}^{+}\vec{f}=1$, et en notant $\vec{h}'$, respectivement $\vec{d}'$, le vecteur à R coefficients formé à partir de $\vec{h}$, respectivement $\vec{d}$, en éliminant la composante $i_0$, l'EQM minimisée peut s'écrire :

$$EQM = E\left[\left\|e(t)\right\|\right]^{2} = E\left[\left\|\vec{w}^{+}\vec{x}(t) - \vec{h}^{+}\vec{d}'(t) - d\left(t - p_{i0}Te\right)\right\|\right]^{2} \tag{7}$$

et la solution du problème de minimisation est donnée par la formule de Wiener :

$$\begin{bmatrix} \vec{w} \\ -\vec{h}' \end{bmatrix} = \left\{E\left[\begin{pmatrix} \vec{x}(t) \\ \vec{d}'(t) \end{pmatrix}\left(\vec{x}(t)^{+}\ \vec{d}'(t)^{+}\right)\right]\right\}^{-1} E\left[\begin{pmatrix} \vec{x}(t) \\ \vec{d}'(t) \end{pmatrix}d\left(t - p_{i0}Te\right)^{\star}\right] \tag{8}$$

"*", en exposant, désigne l'opérateur de conjugaison.

En notant :

$$R_{D'X} = E\left[\vec{d}'(t)\,\vec{x}(t)^{+}\right]$$

$$R_{D'D'} = E\left[\vec{d}'(t)\,\vec{d}'(t)^{+}\right]$$

$$\vec{r}_{Xd} = E\left[\vec{x}(t)\,d\left(t - p_{i0}Te\right)^{\star}\right]$$

$$\vec{r}_{D'd} = E\left[\vec{d}'(t)\, d(t - p_{i0}Te)^*\right].$$

On obtient les deux équations suivantes :

$$R_{XX}\vec{w} - R_{D'X}{}^+ h' = \vec{r}_{Xd}$$

$$R_{D'X}\,\vec{w} - R_{D'D'}h' = \vec{r}_{D'd}$$

Le vecteur $\vec{h}'$ s'exprime donc en fonction du vecteur $\vec{w}$ :

$$\vec{h}' = R_{D'D'}{}^{-1}\left(R_{D'X}\vec{w} - \vec{r}_{D'd}\right) \qquad (9)$$

et le vecteur $\vec{w}$ peut s'écrire :

$$\vec{w} = A^{-1}\left(\vec{r}_{Xd} - R_{D'X}{}^+ R_{D'D'}\,\vec{r}_{D'd}\right) \qquad (10)$$

avec:

$$A = R_{XX} - R_{D'X}{}^+ R_{D'D'}{}^{-1}R_{D'X} \qquad (11)$$

Afin de mieux comprendre le comportement de la partie spatiale 11, l'expression des filtres $\vec{w}$ et $\vec{h}'$ lorsque le réseau reçoit deux trajets utiles $\vec{s}_1$ et $\vec{s}_2$, dont les contributions sont décorrélées, est donnée ci-après :

$$\vec{x}(t) = \alpha_1\, d(t)\, \vec{s}_1 + \alpha_2\, d(t - \tau)\, \vec{s}_2 + \vec{b}(t).$$

Dans ces conditions, la matrice $R_{D'X}$ s'exprime, en supposant par ailleurs que les symboles émis sont décorrélés entre eux ($R_{D'D} = Id$, où Id correspond à la matrice Identité et $\vec{r}_{D'd} = 0$), de la façon suivante :

$$R_{D'X} = \alpha_2{}^*\left[0,\dots, \vec{s}_2{}^+, 0, \dots, 0\right]^T,$$

où le vecteur $\vec{s}_2{}^+$ est placé sur la ligne correspondant au retard $\tau$.

On obtient donc :

$A = R_{XX} - |\alpha_2|^2 \vec{s}_2 \vec{s}_2{}^+$, soit, en notant R la matrice de corrélation de la composante bruit de fond + brouilleurs :

$$A = \left|\alpha_1\right|^2 \vec{s}_1 \vec{s}_1{}^+ + \left|\alpha_2\right|^2 \vec{s}_2 \vec{s}_2{}^+ + R - \left|\alpha_2\right|^2 \vec{s}_2 \vec{s}_2{}^+ = \left|\alpha_1\right|^2 \vec{s}_1 \vec{s}_1{}^+ + R.$$

La matrice A correspond donc à la matrice de corrélation $R_{XX}$ que l'on obtiendrait en présence uniquement du premier trajet. Par ailleurs, le second trajet n'intervient pas dans le vecteur de corrélation $\vec{r}_{Xd}$.

Le vecteur poids définissant la partie spatiale 11 est donc le vecteur poids correspondant au FASR adapté sur le trajet 1, comme si le second trajet n'était pas présent. Ainsi, l'antenne "pointe" son lobe principal dans la direction du trajet 1 et place des zéros dans la direction des brouilleurs. Le gain dans la direction du trajet 2 est a priori quelconque. En sortie de la partie spatiale 11, le second trajet n'est donc pas éliminé et une égalisation du signal en sortie est nécessaire.

En considérant la deuxième contrainte $\vec{h}^+\vec{h} = 1$,

la minimisation de l'EQM s'obtient, pour un vecteur $\vec{w}$ annulant le gradient du critère par rapport à $\vec{w}$, par la formule suivante :

$$\nabla_w \, EQM = R_{XX}\vec{w} - R_{DX}^{+} \, \vec{h} \tag{12}$$

Le vecteur $\vec{w}$ s'exprime en fonction du vecteur $\vec{h}$ par la formule suivante :

$$\vec{w} = R_{XX}^{-1} \, R_{DX}^{+} \, \vec{h} \tag{13}$$

En remplaçant $\vec{w}$ par sa valeur en fonction de $\vec{h}$ dans l'expression du critère minimisé, on obtient :

$$EQM = \vec{h}^+ \left( R_{DD} - R_{DX} \, R_{XX}^{-1} \, R_{DX}^{+} \right) \vec{h} \tag{14}$$

Le vecteur $\vec{h}$ solution de ce problème est donc le vecteur propre associé à la valeur propre minimale de la matrice B, avec :

$$B = R_{DD} - R_{DX} \, R_{XX}^{-1} \, R_{DX}^{+} \tag{15}$$

Le vecteur $\vec{w}$ s'en déduit à partir de la formule (13).

L'étape d'égalisation 5 est mise en oeuvre par un égaliseur 9 de type DFE monocapteur. Il est constitué d'un filtre transverse, non représenté, au rythme symbole, et d'un filtre récursif. Le signal d'entrée du filtre transverse est le signal issu des moyens de filtrage spatial 8 : $y(t) = \vec{w}^+ \vec{x}(t)$. Le signal d'entrée du filtre récursif est formée des symboles connus des séquences d'apprentissage SA et des symboles décidés. Un organe de décision également non représenté, est placé en sortie des filtres transverse et récursif et permet d'avoir accès aux symboles utiles émis.

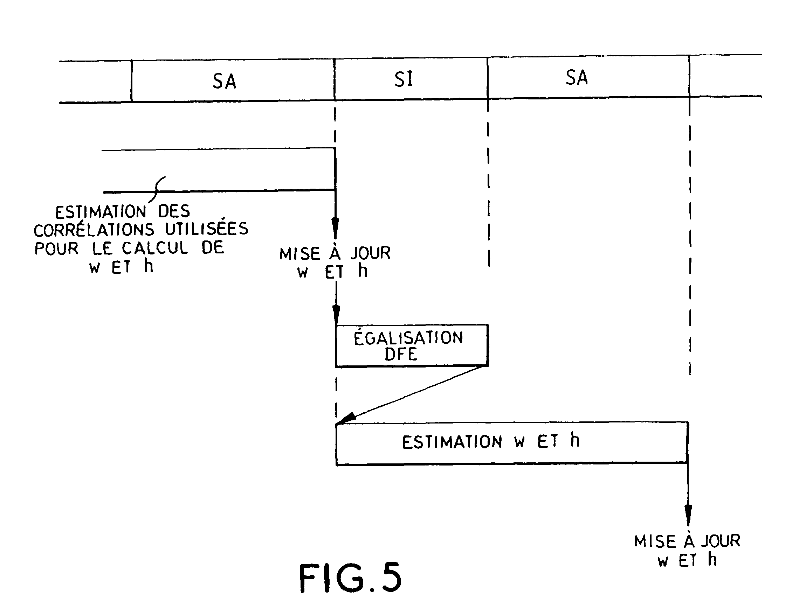

Les traitements sont effectués suivant une chronologie illustrée par les schémas des figures 4 et 5.

Dans une première étape, les vecteurs de pondérations $\vec{w}$ et $\vec{h}$ sont mis à jour au début de chacune des séquences d'information SI (= fin des séquences d'apprentissage SA), soit quatre fois par trame pour l'exemple traité. Cette mise à jour assure ainsi une poursuite correcte des non stationnarités du canal de propagation utile et brouilleur (s).

Dans une deuxième étape, les données fournies à l'égaliseur DFE, 9, pour qu'il puisse démoduler la séquence d'information SI suivante, sont filtrées à l'aide du vecteur $\vec{w}$. Le vecteur $\vec{h}$ peut être utilisé pour calculer directement les coefficients de l'égaliseur DFE 9.

Dans une troisième étape, l'égaliseur DFE 9 démodule la séquence d'information, SI et

Dans une quatrième étape, les symboles de la séquence d'information SI démodulés par l'égaliseur 9 et les symboles connus de la séquence d'apprentissage SA suivante sont utilisés comme entrées de l'algorithme d'estimation de $\vec{w}$ et $\vec{h}$ (poursuite des variations du canal de propagation).

Le calcul du vecteur de pondérations w permettant le calcul de la sortie de la partie spatiale 11 et celui de l'estimée du canal utile h en sortie du filtrage spatial 8 est effectuée conjointement en optimisant le critère décrit précédemment.

Le calcul des pondérations peut être effectué suivant deux modes:

Un premier mode d'initialisation est utilisé pour calculer $\vec{w}$ et $\vec{h}$ sur la première séquence d'apprentissage SA de la première trame reçue, ou lorsqu'il y a des discontinuités dans le traitement (recalage de synchronisation par exemple). Le calcul est effectué sur les L symboles de la séquence d'apprentissage à l'aide des formules (9) (10) (11) (contrainte $\vec{h}^+ \vec{f} = 1$) ou (13) (14) (contrainte $\vec{h}^+ \vec{h} = 1$), en utilisant l'estimateur classique non biaisé pour le calcul des différentes corrélations :

$$R_{UV} = \frac{1}{L-R} \sum_{k=R+1}^{L} U(k)\,V(k)^{+} \qquad (16)$$

où $U(k)$ et $V(k)$ peuvent représenter $\vec{d}'(k)$, $\vec{x}'(k)$ ou $d(t-p_{i0}Te)$ pour la contrainte $\vec{h}^{+}\vec{f} = 1$, et $\vec{d}(k)$ ou $\vec{x}(k)$ pour la contrainte $\vec{h}^{+}\vec{h} = 1$. Pour cette dernière contrainte, le calcul de $\vec{h}$ passe par une décomposition en valeurs propres, vecteurs propres qui peut être réalisée par exemple par un algorithme de Jacobi.

(la sommation commence par $k = R+1$ pour tenir compte du fait que $\vec{d}(k)$ fait intervenir les symboles $d(k)$ à $d(k-R)$. Il est possible de commencer la sommation pour $k=1$ en considérant $d(k) = 0$ pour $k \leq 0$.)

En mode normal, la poursuite des variations du canal de propagation utile et brouilleur peut être assurée par plusieurs algorithmes :

- algorithmes des moindres carrés avec facteur d'oubli : $\vec{w}$ et $\vec{h}$ sont calculés sur les symboles de la séquence d'information qui vient d'être démodulée et sur la séquence d'apprentissage qui la suit à l'aide des formules (9) (10) (11) (contrainte $\vec{h}^{+}\vec{f} = 1$) ou (13) (14) (contrainte $\vec{h}^{+}\vec{h} = 1$), en utilisant un facteur d'oubli $\lambda(0 < \lambda < 1)$ pour calculer les différentes corrélations à chaque itération n :

$$R_{UV}(n) = \sum_{k=1}^{n} \lambda^{n-k}\, U(k)\,V(k)^{+} \qquad (17)$$

Le calcul de $\vec{w}$ et $\vec{h}$ est ensuite effectué à partir de ces corrélations pour chaque itération n correspondant au début d'une séquence d'information SI.

- algorithme du gradient à pas adaptatif. Voir à ce sujet un article de P. BRAGARD et G. JOURDAIN, "A fast self optimized LMS algorithm fornon stationary identification", IEEE proceedings ICASSP 1990, pp 1425-1428 [9] où $\vec{w}$ et $\vec{h}$ sont calculés sur les symboles de la séquence d'information SI qui vient d'être démodulée et sur la séquence d'apprentissage qui la suit par un algorithme du gradient, dont le pas d'adaptation est lui-même optimisé pour les canaux non stationnaires.

Il faut remarquer que l'algorithme du gradient à pas adaptatif est aussi utilisé sur la première séquence d'apprentissage SA de la première trame, après que l'initialisation de $\vec{w}$ et $\vec{h}$ décrite ci-dessus ait été effectuée. Les données de cette première séquence sont donc utilisées deux fois, ce qui permet d'obtenir une bonne initialisation de l'algorithme du gradient.

L'égalisation DFE 9 qui suit la partie spatiale II peut être réalisée par tous les types d'égaliseurs DFE existants.

Dans un premier type d'égaliseur DFE 9, l'estimée $\vec{c}$ du canal de propagation en sortie de la partie spatiale 11 est calculée dans un premier temps à partir de $\vec{h}$, par les formules suivantes :

- pour la contrainte $\vec{h}^{+}\vec{f} = 1$ ;

$\vec{c} = \vec{h} - \varepsilon_{min}\,\vec{f}$, où $\varepsilon_{min}$ représente l'EQM minimale du critère (5).

Les composantes de $\vec{h}$ donnent donc les coefficients du canal en sortie de la partie spatiale 11, sauf pour le coefficient correspondant à la contrainte, pour lequel il faut retrancher $\varepsilon_{min}$.

- pour la contrainte $\vec{h}^{+}\vec{f} = 1$ :

$$\vec{c} = (1 - \varepsilon_{min})\,\vec{h} = (1 - \lambda_{min})\,\vec{h},$$

où $\lambda_{min}$ représente la valeur propre minimale de la matrice B définie par la formule (15).

Le canal en sortie de la partie spatiale 11 est proportionnel à $\vec{h}$, le facteur de proportionnalité étant égal à $1 - \lambda_{min}$.

Dans un second temps, les coefficients de l'égaliseur DFE 9 sont calculés directement à partir de l'estimée

$\overset{\scriptscriptstyle\vee}{\text{c}}$ du canal de propagation [1]. La mise à jour de l'égaliseur DFE 9 est donc effectuée consécutivement à celle des filtres $\vec{w}$ et $\vec{h}$, au début de chacune des séquences d'information SI.

Si cette possibilité est utilisée, seuls les échantillons correspondant aux séquences d'informations SI sont filtrés par la partie spatiale.

Dans un deuxième type d'égaliseur DFE 9, les coefficients de l'égaliseur DFE 9 sont calculés à partir d'un algorithme du type moindres carrés (par exemple l'algorithme dit du "treillis spatial" détaillée dans la thèse de L.FETY, "Méthodes de traitement d'antenne adaptées aux radiocommunications", thèse de doctorat de l'ENST, Juin 1988 [10]) de façon indépendante de l'estimation de canal. Dans ce cas, on utilise comme réplique les symboles connus sur les séquences d'apprentissage SA et les symboles démodulés sur les séquences d'information SI. En conséquence, contrairement au cas précédent, tous les échantillons doivent être filtrés par la partie spatiale (séquences d'apprentissages SA et séquences d'information SI).

Dans un troisième type d'égaliseur DFE 9, l'égalisation peut comprendre, en amont, un filtrage adapté au canal, dont la sortie est échantillonnée au rythme symbole et l'entrée à une ou deux fois le rythme symbole. Dans ce cas, la sortie de la partie spatiale 11 est calculée avec un rythme compatible de l'entrée du filtre adaptée au canal. L'estimation de canal peut être effectuée soit de façon indépendante du calcul de la partie spatiale 11, soit en tenant compte de la partie spatiale 11 et dans ce dernier cas, le filtre $\vec{h}$ doit être échantillonné avec un rythme compatible de l'échantillonnage en entrée du filtre adapté au canal. L'égalisation DFE 9 en sortie du filtre adapté est ensuite effectuée comme dans le premier ou le deuxième type d'égaliseur DFE.

L'égaliseur DFE 9 peut être remplacé, en particulier pour des applications du type GSM où la longueur de la réponse impulsionnelle du canal exprimée en nombre de symboles est moins importante, par un organe de décision fondé sur l'algorithme de Viterbi. Les remarques données ci-dessus pour l'égaliseur DFE 9 sont encore valables :

- l'estimation du canal utile en sortie de filtrage spatial II peut être faite soit de façon indépendante du calcul de la partie spatiale, soit en utilisant le vecteur $\vec{h}$.
- si le vecteur $\vec{h}$ est utilisé, il doit être échantillonné à un rythme égal à celui en entrée du filtrage adapté au canal.

**Revendications**

1. Procédé d'égalisation multicapteur dans un récepteur radioélectrique, du type comportant un réseau de capteurs et une partie de filtrage spatial couplée à une partie de filtrage temporel comportant chacune un nombre déterminé de coefficients, permettant la démodulation d'un message numérique de type modulation numérique série reçu par le récepteur, en présence de multitrajets de propagation et de sources interférentes, pour des modulations formées de trames comportant des séquences d'apprentissage (SA) et des séquences d'information (SI), comportant :

   - une première étape (1) consistant à numériser le signal reçu par chaque capteur, à transformer le signal numérisé en bande de base, et à filtrer par un filtrage passe-bas le signal en bande de base,
   - une deuxième étape (2) consistant à effectuer une prise de synchronisation sur les signaux issus de la première étape, à estimer les trajets utiles, en estimant le nombre de trajets, les temps de retard relatifs des différents trajets et leur puissance relative, et à estimer le décalage en fréquence résultant des imprécisions sur les fréquences d'émission et de réception et de la propagation ionosphérique,
   - une troisième étape (3) consistant à compenser le décalage en fréquence des signaux délivrés par chaque capteur, en fonction de l'estimation effectuée dans la deuxième étape,

   caractérisé en ce qu'il comprend :

   - une quatrième étape (4) consistant:

      • à calculer d'une part, les coefficients d'un filtre spatial appliqué sur les signaux issus de la troisième étape et, d'autre part, les coefficients d'un filtre temporel appliqué sur le signal réplique constitué, soit à partir des symboles connus pour les séquences d'apprentissage (SA), soit à partir des symboles démodulés pour les séquences d'information (SI), les coefficients de ces deux filtres étant calculés pour minimiser, sous une contrainte déterminée, un critère d'erreur quadratique moyenne, entre le signal de sortie du filtre spatial et le signal de sortie du filtre temporel,
      • et à filtrer les signaux issus de la troisième étape à l'aide des coefficients du filtre spatial ainsi calculés, optimisant ainsi le gain du réseau de capteurs dans la direction du signal utile en sortie du filtrage spatial et assurant la réjection des interférences,

- une cinquième étape (5) consistant à égaliser le signal issu de la quatrième étape (4) par une égalisation monodimensionnelle à un rythme symbole décidant des symboles transmis ;

  et en ce que les coefficients des filtres spatial et d'égalisation ainsi que l'estimée du canal utile sont mis à jour suivant un séquencement déterminé des trames.

2. Procédé selon la revendication 1, caractérisé en ce que la quatrième étape (4) consiste en outre à estimer le canal utile en sortie du filtre spatial quand l'estimée du canal utile est utilisée par l'égalisation monodimensionnelle placée en sortie de la partie spatiale.

3. Procédé selon l'une quelconque des revendications 1 et 2, caractérisé en ce que dans l'étape (4) de calcul des coefficients du filtre spatial, du filtre temporel et de la partie de filtrage spatial, la minimisation du critère d'erreur quadratique moyenne est effectuée selon une contrainte vérifiant $\vec{h}^+\vec{f}$ dans laquelle $\vec{f}$ est un vecteur à (R+1) composantes comportant un nombre déterminé R de zéros et un, correspondant au trajet de plus forte puissance déterminé à partir de la détection des trajets utiles, et dans laquelle $\vec{h}$ est le vecteur de pondération des coefficients de la partie de filtrage temporel ; le vecteur $\vec{h}$ permettant également une estimée du canal utile de propagation en sortie de la partie de filtrage spatial.

4. Procédé selon l'une quelconque des revendications 1 et 2, caractérisé en ce que dans l'étape (4) de calcul des coefficients du filtre spatial, du filtre temporel et de la partie de filtrage spatial, la minimisation du critère d'erreur quadratique moyenne est effectuée selon une contrainte de norme sur le vecteur de pondération $\vec{h}$ des coefficients de la partie de filtrage temporel vérifiant $\vec{h}^+\vec{h} = 1$ ; le vecteur $\vec{h}$ permettant également une estimée du canal utile de propagation en sortie de la partie de filtrage spatial.

5. Procédé selon l'une quelconque des revendications 1 à 4, caractérisé en ce que la mise à jour des coefficients des filtres spatial, temporel et d'égalisation s'effectue au début de chacune des séquences d'information (SI) de la trame courante, l'égalisation monodimensionnelle étant effectué sur la séquence d'information (SI), et les coefficients du filtre spatial et du filtre temporel étant estimés à l'aide de la séquence d'information (SI) démodulée et de la séquence d'apprentissage (SA) qui suit.

6. Récepteur radioélectrique multicapteurs pour la mise en oeuvre du procédé selon l'une quelconque des revendications 1 à 5, du type comprenant un réseau de N capteurs couplés à des moyens (6) de numérisation, de passage en bande de base et de filtrage passe-bas couplé en sortie d'une part, à des moyens de synchronisation (10) et, d'autre part, à des moyens (7) de compensation du décalage en fréquence contrôlés par les moyens (10) de synchronisation, et comprenant des moyens (9) d'égalisation monodimensionnelle comportant un égaliseur décidant des symboles transmis au rythme-symbole, caractérisé en ce qu'il comprend :

  - des moyens (8) de filtrage spatial et d'estimation de canal de propagation couplés, en entrée aux moyens (7) de compensation du décalage en fréquence et aux moyens (10) de synchronisation, et en sortie aux moyens (9) d'égalisation monodimensionnelle, ces moyens (8) comportant une partie de filtrage spatial (11) comportant un coefficient complexe (13) par voie, une voie étant formée respectivement par chaque capteur (1 à N), comportant un filtre temporel (12) recevant sur son entrée un signal réplique déterminé, l'erreur quadratique moyenne entre la sortie de la partie de filtrage spatial (11) et la sortie du filtre temporel (12) étant minimisée selon une contrainte déterminée, ces moyens (8) comportant en outre des moyens d'estimation de trajets utiles pour estimer le nombre de trajets, les temps de retard relatifs des différents trajets et leur puissance relative.

**Patentansprüche**

1. Mehrfachaufnehmer-Entzerrungsverfahren in einem Funkempfänger des Typs, mit einer Gruppe von Aufnehmern und einem Abschnitt für räumliche Filterung, der mit einem Abschnitt für zeitliche Filterung verbunden ist, wovon jeder eine bestimmte Anzahl von Koeffizienten besitzt, das bei Vorhandensein von mehreren Ausbreitungsstrecken und interferierenden Quellen die Demodulation einer digitalen Nachricht des Typs mit serieller digitaler Modulation, die vom Empfänger empfangen wird, für Modulationen ermöglicht, die aus Rahmen gebildet sind, die Lernsequenzen (SA) und Informationssequenzen (SI) enthalten, mit:

  - einem ersten Schritt (1), der darin besteht, das von jedem Aufnehmer empfangene Signal zu digitalisieren, das digitalisierte Signal in das Grundband zu transformieren und das Grundband-Signal durch ein Tiefpaßfilter zu filtern,

- einem zweiten Schritt (2), der darin besteht, eine Synchronisation der aus dem ersten Schritt ausgegebenen Signale auszuführen, die Nutzstrecken zu schätzen, indem die Anzahl der Strecken, die relativen Verzögerungszeiten der verschiedenen Strecken und ihre relative Leistung geschätzt werden, und die Frequenzverschiebung zu schätzen, die sich aus Ungenauigkeiten der Sendefrequenzen und der Empfangsfrequenzen und aus der ionosphärischen Ausbreitung ergibt,

- einem dritten Schritt (3), der darin besteht, die Frequenzverschiebung der von jedem Aufnehmer gelieferten Signale in Abhängigkeit von der im zweiten Schritt ausgeführten Schätzung zu kompensieren,

    dadurch gekennzeichnet, daß es enthält:

- einen vierten Schritt (4), der darin besteht:

    · einerseits die Koeffizienten eines räumlichen Filters, das auf die im dritten Schritt ausgegebenen Signale angewendet wird, und andererseits die Koeffizienten eines zeitlichen Filters, das auf die Signalkopie angewendet wird, die entweder aus bekannten Symbolen für die Lernsequenzen (SA) oder aus demodulierten Symbolen für die Informationssequenzen (SI) gebildet wird, zu berechnen, wobei die Koeffizienten dieser beiden Filter berechnet werden, um unter einer bestimmten Bedingung ein Kriterium für einen mittleren quadratischen Fehler zwischen dem Ausgangssignal des räumlichen Filters und dem Ausgangssignal des zeitlichen Filters minimal zu machen,

    · die im dritten Schritt ausgegebenen Signale mit Hilfe der somit berechneten Koeffizienten des räumlichen Filters zu filtern, wodurch die Verstärkung der Aufnehmergruppe in Richtung des Nutzsignals am Ausgang der räumlichen Filterung optimiert wird und die Zurückweisung der Interferenzen sichergestellt ist,

- einen fünften Schritt (5), der darin besteht, das im vierten Schritt (4) ausgegebene Signal durch eine eindimensionale Entzerrung in einem Symboltakt, der die übertragenen Symbole festlegt, zu entzerren;

    und daß die Koeffizienten der räumlichen Filter und der Entzerrung sowie die Schätzung des Nutzkanals entsprechend einer bestimmten Reihenfolge der Rahmen aktualisiert werden.

2. Verfahren nach Anspruch 1, dadurch gekennzeichnet, daß der vierte Schritt (4) außerdem darin besteht, den Nutzkanal am Ausgang des räumlichen Filters zu schätzen, wenn die Schätzung des Nutzkanals von der eindimensionalen Entzerrung, die am Ausgang des räumlichen Abschnitts erfolgt, verwendet wird.

3. Verfahren nach irgendeinem der Ansprüche 1 und 2, dadurch gekennzeichnet, daß im Schritt (4) des Berechnens der Koeffizienten des räumlichen Filters, des zeitlichen Filters und des Abschnitts für räumliche Filterung die Minimierung des Kriteriums für mittleren quadratischen Fehler gemäß einer Bedingung ausgeführt wird, die $\vec{h} + \vec{f}$ erfüllt, worin $\vec{f}$ ein Vektor mit (R + 1) Komponenten ist, die eine bestimmte Anzahl R von Nullen und eine Eins, die der Strecke mit der höchsten Leistung entspricht, der anhand der Erfassung der Nutzwege bestimmt wird, enthalten und worin $\vec{h}$ der Gewichtungsvektor für die Koeffizienten des Abschnitts für zeitliche Filterung ist; wobei der Vektor $\vec{h}$ außerdem eine Schätzung des Ausbreitungsnutzkanals am Ausgang des Abschnitts für räumliche Filterung ermöglicht.

4. Verfahren nach irgendeinem der Ansprüche 1 und 2, dadurch gekennzeichnet, daß im Schritt (4) der Berechnung der Koeffizienten des räumlichen Filters, des zeitlichen Filters und des Abschnitts für räumliche Filterung die Minimierung des Kriteriums für mittleren quadratischen Fehler gemäß einer Normierungsbedingung für den Gewichtungsvektor $\vec{h}$ erfolgt, wobei die Koeffizienten des Abschnitts für zeitliche Filterung $\vec{h} + \vec{h} = 1$ erfüllen; wobei der Vektor h außerdem eine Schätzung des Ausbreitungsnutzkanals am Ausgang des Abschnitts für räumliche Filterung ermöglicht.

5. Verfahren nach irgendeinem der Ansprüche 1 bis 4, dadurch gekennzeichnet, daß die Aktualisierung der Koeffizienten der räumlichen und zeitlichen Filter und der Entzerrung am Anfang jeder der Informationssequenzen (SI) des momentanen Rahmens erfolgt, wobei die eindimensionale Entzerrung an der Informationssequenz (SI) ausgeführt wird und die Koeffizienten des räumlichen Filters und des zeitlichen Filters mit Hilfe der demodulierten Informationssequenz (SI) und der folgenden Lernsequenz (SA) geschätzt werden.

6. Mehrfachaufnehmer-Funkempfänger für die Ausführung des Verfahrens nach irgendeinem der Ansprüche 1 bis 5, des Typs mit einer Gruppe aus N Aufnehmern, die mit Mitteln (6) zur Digitalisierung, zur Verschiebung ins Grundband und zur Tiefpaßfilterung verbunden sind, der mit seinem Ausgang einerseits mit Synchronisationsmitteln (10) und andererseits mit Mitteln (7) zur Kompensation der Frequenzverschiebung, die durch die Synchronisationsmittel (10) gesteuert werden, verbunden ist und Mittel (9) zur eindimensionalen Entzerrung enthält, die einen Entzerrer enthalten, der die im Symboltakt übertragenen Symbole festlegt, dadurch gekennzeichnet, daß er enthält:

- Mittel (8) zur räumlichen Filterung und zur Schatzung des Ausbreitungskanals, die mit ihrem Eingang mit den Mitteln (7) zur Kompensation der Frequenzverschiebung und mit den Synchronisationsmitteln (10) verbunden sind und mit ihrem Ausgang mit den Mitteln (9) zur eindimensionalen Entzerrung verbunden sind, wobei diese Mittel (8) einen Abschnitt für räumliche Filterung (11), der einen komplexen Koeffizienten (13) pro Weg enthält, wobei ein Weg durch jeweils einen Aufnehmer (1 bis N) gebildet ist und ein zeitliches Filter (12) enthält, das an seinem Eingang ein bestimmtes Kopiesignal empfängt, wobei der mittlere quadratische Fehler zwischen dem Ausgang des Abschnitts für räumliche Filterung (11) und dem Ausgang des zeitlichen Filters (12) gemäß einer vorgegebenen Bedingung minimiert wird, wobei diese Mittel (8) außerdem Mittel zum Schätzen der Nutzstrecken enthalten, um die Anzahl der Strecken, die relativen Verzögerungszeiten der verschiedenen Strecken und ihre relative Leistung zu schätzen.

## Claims

1. Multisensor equalisation method in a radioelectric receiver, of the type having a network of sensors and a spatial filtering section connected to a temporal filtering section, each section having a given number of coefficients, allowing demodulation of a digital message of a series digital modulation type received by the receiver, in the presence of multipath propagation and of interference sources, in respect of modulations formed by frames including learning sequences (SA) and information sequences (SI), the method comprising

   - a first step (1) which consists in digitising the signal received by each sensor, converting the digitised signal to baseband, and filtering the baseband signal by low-pass filtering,
   - a second step (2) which consists in carrying out synchronisation sampling of the signals from the first step, rating the useful paths by rating the number of paths, the relative delay times of the various paths and their relative power, and rating the frequency shift resulting from inaccuracies on the transmission and reception frequencies and ionospheric propagation,
   - a third step (3) which consists in compensating for the frequency shift in the signals supplied by each sensor, in response to the rating carried out in the second step,

   characterised in that it includes:

   - a fourth step (4) which consists in:

     · computing, on the one hand, the coefficients of a spatial filter applied to the signals from the third step and, on the other hand, the coefficients of a temporal filter applied to the replica signal constituted either from the known symbols in respect of the learning sequences (SA) or from the demodulated symbols in respect of the information sequences (SI), the coefficients of these two filters being computed in order to minimise, applying a given constraint, a mean quadratic error criterion between the output signal of the spatial filter and the output signal of the temporal filter,
     · and filtering the signals from the third step, with the help of the spatial filter coefficients thus computed, accordingly optimising the gain of the sensor network in the direction of the useful signal on the output side of the spatial filtering and ensuring that interference factors are rejected,

   - a fifth step (5) which consists in equalising the signal from the fourth step (4) by monodimensional equalisation at a symbol rate determining the transmitted symbols;

   and in that the spatial filter and equalisation coefficients, along with the rating of the useful channel, are updated in accordance with a given frame sequencing procedure.

2. Method according to claim 1, characterised in that the fourth step (4) furthermore consists in rating the useful channel on the output side of the spatial filter when the useful channel rating is used by monodimensional equalisation positioned on the output side of the spatial section.

3. Method according to either one of claims 1 and 2, characterised in that in step (4) which involves computing the coefficients of the spatial filter, of the temporal filter and of the spatial filtering section, the minimisation of the mean quadratic error criterion is carried out according to a verifying constraint $\vec{h}^+ \vec{f}$ in which $\vec{f}$ is vector with (R+1) components having a given number R of zeros plus a one, corresponding to the most powerful path determined from the detection of the useful paths, and in which $\vec{h}$ is the weighting vector for the coefficients of the temporal filtering section; where vector $\vec{h}$ likewise makes it possible to rate the useful propagation channel on the output side of the spatial filtering section.

4. Method according to either one of claims 1 and 2, characterised in that in step (4) which involves computing the coefficients of the spatial filter, of the temporal filter and of the spatial filtering section, the minimisation of the mean quadratic error criterion is carried out according to a standard constraint on the weighting vector $\vec{h}$ of the coefficients of temporal filtering section verifying $\vec{h}^+ \vec{h} = 1$; where vector $\vec{h}$ likewise makes it possible to rate the useful propagation channel on the output side of the spatial filtering section.

5. Method according to any one of claims 1 to 4, characterised in that updating the coefficients of the spatial, temporal and equalisation filters is carried out at the start of each of the information sequences (SI) of the current frame, the monodimensional equalisation being carried out on the information sequence (SI), and the coefficients of the spatial filter and of the temporal filter being rated with the help of the demodulated information sequence (SI) and of the learning sequence (SA) which follows.

6. Multisensor radioelectric receiver for implementing the method according to any one of claims 1 to 5, of the type comprising a network of N sensors connected to means (6) for digitisation, baseband transition and low-pass filtering connected on the output side, on the one hand to synchronisation means (10) and on the other hand to means (7) for frequency shift compensation controlled by the synchronisation means (10), and comprising means (9) for monodimensional equalisation having a fixed equaliser of the transmitted symbols at the symbol rate, characterised in that it comprises:

   - means (8) for spatial filtering and propagation channel rating connected, on the input side, to the frequency shift compensating means (7) and to the synchronisation means (10), and on the output side to the monodimensional equalisation means (9), these means (8) having a spatial filtering section (11) which includes a complex coefficient (13) per track, a track being formed respectively by each sensor (1 to N), having a temporal filter (12) which on its input side receives a given replica signal, the mean quadratic error between the output of the spatial filtering section (11) and the output of the temporal filter (12) being minimised according to a given constraint, these means (8) furthermore having means for rating useful paths in order to rate the number of paths, the relative delay times of the different paths and their relative power.

FIG.1

MOYENS DE FILTRAGE SPATIAL ET ESTIMATION DE CANAL

8

ÉGALISEUR (ÉGALISEUR DFE, VITERBI,...)

9

SYMBOLES DÉCIDÉS

MOYENS DE COMPENSATION DU DÉCALAGE EN FRÉQUENCE

7

MOYENS DE NUMÉRISATION PASSAGE BB FILTRAGE NYQUIST

6

MOYENS DE SYNCHRONISATION
-DÉTECTION TRAJETS UTILES (NOMBRE, RETARDS, PUISSANCES)
-ESTIMATION DÉCALAGE FRÉQUENCE

10

N

1

FIG.2

FIG.3

| TRAME PRÉCÉ-DENTE | | | TRAME COURANTE | | | | | | | TRAME SUIVANTE |
|---|---|---|---|---|---|---|---|---|---|---|
| | SA | SI | SA | SI | SA | SI | SA | SI | | SA |

MISE À JOUR

FILTRAGE SPATIAL

ÉGALISATION DFE

FIG.4

FIG.5

EP 0 867 079 B1